# EUROPÄISCHE PATENTANMELDUNG

(11) **EP 4 202 327 A1**
(43) Veröffentlichungstag der Anmeldung: **28.06.2023**
(21) Anmeldenummer: 22211287.2
(22) Anmeldetag: 05.12.2022
(51) Int. Cl.: F25D 23/02, F25D 25/02, E05F 15/622

(54) **KÜHL- UND/ODER GEFRIERGERÄT**

(30) Priorität: 21.12.2021 DE 102021134070; 28.01.2022 DE 102022102062
(71) Anmelder: Liebherr-Hausgeräte Ochsenhausen GmbH, 88416 Ochsenhausen (DE)
(72) Erfinder: HANTKE, Wolfgang, 88214 Ravensburg (DE)
(74) Vertreter: Herrmann, Uwe

(57) **Zusammenfassung**

Die vorliegende Erfindung betrifft ein Kühl- und/oder Gefriergerät mit einem bewegbaren Element, wobei das bewegbare Element durch einen Spindelantrieb mit einer Spindel (5) und einer Spindelmutter (3) über die durch die Spindel (5) bewegbare Spindelmutter (3) bewegbar ist, wobei das bewegbare Element mit der Spindelmutter (3) verbunden ist.

## Beschreibung

Die vorliegende Erfindung betrifft ein Kühl- und/oder Gefriergerät mit einem bewegbaren Element, wobei das bewegbare Element durch einen Spindelantrieb mit einer Spindel und einer Spindelmutter über die durch die Spindel bewegbare Spindelmutter bewegbar ist, wobei das bewegbare Element mit der Spindelmutter verbunden ist.

Zur automatischen Bewegung von Elementen eines Kühl- und/oder Gefriergeräts, wie beispielsweise einer Tür oder einer Schublade, wird nach dem Stand der Technik ein Spindelgetriebe, welches eine Spindel mit einer gleichbleibenden Steigung aufweist, verwendet. Dieses Spindelgetriebe wird oftmals von einem Elektromotor angetrieben.

Teilweise wird die Spindelsteigung auf Anforderungen eines Kunden eines Kühl- und/oder Gefriergeräts angepasst. Es werden jedoch immer Spindeln mit gleichbleibender Steigung, so genannte Linearspindeln, verwendet.

Durch Versuche konnte festgestellt werden, dass zum Öffnen einer Tür, insbesondere einer Außentür, eines Kühl- und/oder Gefriergeräts eine sehr hohe Kraft auf Grund der notwendigen Überwindung des Unterdrucks im gekühlten Innenraum benötigt wird. Die gekühlte Luft im Innenraum hat einen geringeren Luftdruck als die Luft der das Kühl- und/oder Gefriergerät umgebenden Atmosphäre. Dadurch übt die Luft der Atmosphäre eine Kraft auf die Türe aus. Verstärkt wird dieser Effekt, wenn bei Kühl- und/oder Gefriergeräten auf ein Schließen der Tür ein erneutes Öffnen innerhalb kürzester Zeit folgt.

Wenn die Tür geöffnet wurde, also der Druckunterschied bzw. die dadurch verursachte Zuhaltekraft überwunden wurde, wird eine wesentlich geringere Kraft zum weiteren Bewegen der Türe benötigt.

Physikalisch betrachtet spielen zwei Phänomene beim Öffnen einer Tür eines Kühl- und/oder Gefriergeräts eine Rolle:
1. Die Masse der Türe muss in Bewegung versetzt werden. Dabei wirkt die Massenträgheit der Türe einer Beschleunigung, also einer Bewegung der Türe, entgegen.
2. Die Druckdifferenz, welche durch die Türdichtung aufrechterhalten wird, bzw. die Zuhaltekraft muss überwunden werden.

Beim Schließen bzw. beim sonstigen Bewegen der Tür wirkt physikalisch lediglich die Massenträgheit der Tür der Bewegung bzw. der Beschleunigung der Türe entgegen.

Es kann also zwischen zwei Lastfällen unterschieden werden: Öffnen und Bewegen der Türe.

Bei einem Spindelantrieb mit gleichbleibender Steigung, also mit einer so genannten Linearspindel ist das hohe Drehmoment zum Öffnen der Türe Auslegungskriterium für den Elektromotor. Da die Spindel das zugeführte Drehmoment immer gleich übersetzt, muss für den Lastfall des Öffnens ein höheres Drehmoment angelegt werden, als bei dem Lastfall Bewegen. Dies führt zu einer Überdimensionierung des Elektromotors in Bezug auf den Lastfall Bewegen. Die Abgabeleistung bzw. das Abgabedrehmoment des Elektromotors wirkt sich auf dessen Herstellungskosten und auf die Baugröße aus.

Vor diesem Hintergrund liegt der vorliegenden Erfindung die Aufgabe zugrunde, den Spindelantrieb optimal an die verschiedenen Lastfälle anzupassen, so dass vor allem keine Überdimensionierung des Spindelantriebs erfolgt. Das Abgabemoment des Spindelantriebs soll mit anderen Worten an den jeweiligen Lastfall angepasst werden.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen: Kühl- und/oder Gefriergerät mit einem bewegbaren Element, wobei das bewegbare Element durch einen Spindelantrieb mit einer Spindel und einer Spindelmutter über die durch die Spindel bewegbare Spindelmutter bewegbar ist, wobei das bewegbare Element mit der Spindelmutter verbunden ist, wobei die Steigung der Spindel in mindestens einem Abschnitt der Spindel eine anderen Wert als in einem anderen Abschnitt der Spindel aufweist.

In anderen Worten betrifft die Erfindung ein Spindelgetriebe mit einer Spindel, welche eine variierende Gewindesteigung aufweist.

Denkbar ist, dass das bewegbare Element eine Tür oder eine Schublade ist.

Auf der Spindel läuft eine mit dem beweglichen Element verbundene Spindelmutter. Diese bewegt sich bei Drehung der Spindel in eine Drehrichtung in eine durch die Ausführung der Spindel vorgegebene geradlinige Richtung, vor allem wenn die Spindelmutter nicht verdrehbar ist. Der Zusammenhang zwischen der Rotation der Spindel und der Translation der Spindelmutter wird durch ein Gewinde hergestellt. Bei einer geringen Steigung des Gewindes führt eine Umdrehung der Spindel zu einem geringeren geradlinigen Weg der Spindelmutter als bei einer hohen Steigung. Gleichfalls führt die Beaufschlagung der Spindel mit einem bestimmten Drehmoment zu einer desto höheren möglichen Kraft an der Spindelmutter, je geringer die Steigung des Gewindes ist.

In anderen Worten führt eine geringere Spindelsteigung zu einer höheren Übersetzung des Drehmoments an der Spindel in eine Kraft an der Spindelmutter und zu einer geringeren Übersetzung der Drehzahl der Spindel in eine geringere Geschwindigkeit an der Spindelmutter.

Die Spindelmutter ist vorzugsweise durch entsprechende Konstruktionen an dem bewegbaren Element angelenkt, sodass eine Bewegung der Spindelmutter zu einer Bewegung des bewegbaren Elements führt.

Die Spindel wird vorzugsweise so ausgeführt, dass diese im Abschnitt in dem sich die Spindelmutter befindet, wenn das bewegbare Element nahe seiner Endpositionen, also beispielsweise nahe der Schließposition und nahe der Offenposition einer Tür ist, eine geringe Steigung und im sonstigen Abschnitt eine große Steigung aufweist. Dadurch wird der Lastpunkt des Antriebsmotors immer im Nennbereich bzw. nicht oder selten im Überlastbereich gehalten.

Findet eine Spindel mit einer variierenden Spindelsteigung Anwendung, so können Antriebsmotoren mit einem kleineren Drehmoment ausgewählt werden.

Denkbar ist, dass die Spindel durch einen Elektromotor angetrieben wird.

In einer möglichen Ausführungsform ist vorgesehen, dass sich zwischen der Spindel und dem Elektromotor eine Kupplung zur Entkoppelung der Spindel von dem Elektromotor befindet.

Diese Kupplung kann den Kraftfluss des Elektromotors auf die Spindel unterbrechen. Dadurch kann beispielsweise eine Bewegung des bewegbaren Elements von Hand erleichtert werden.

Die Spindelmutter fährt auf der Spindel vorzugsweise einen Verfahrweg ab, der sich zwischen zwei konstruktiv definierten Endpunkten befindet.

Denkbar ist, dass die Spindelsteigung in einem Abschnitt von weniger als 40 %, vorzugsweise von weniger als 30 %, vorzugsweise von weniger als 20 %, vorzugsweise von weniger als 10 % des möglichen Verfahrwegs der Spindelmutter geringer ist als in einem anderen Abschnitt.

Denkbar ist des Weiteren, dass die Spindelsteigung an einem Ende oder an beiden Enden des Verfahrwegs der Spindelmutter geringer ist als in der Mitte des Verfahrwegs.

Möglich ist, dass die Spindel ein Trapezgewinde oder ein Flachgewinde aufweist.

Ebenso möglich ist, dass die Spindel selbsthemmend ist. Dies bedeutet, dass die Spindel durch Kraftausübung auf die Spindelmutter nicht bewegbar ist.

In einer denkbaren Ausführungsform ist die Spindelmutter eine Kugelumlaufmutter oder eine Umlaufmutter mit Planetengewinderollen oder mit Rollenrückführung. Die Spindelmutter kann aber auch eine mit einem Innengewinde versehene Mutter sein.

Vorzugsweise kann durch die Verwendung einer Spindel mit einer variablen Spindelsteigung eine Dämpfung der Bewegung des bewegbaren Elements, bevor das bewegbare Element seine jeweiligen Endpositionen, beispielsweise offen und geschlossen, erreicht, ermöglicht werden. Dies ist vornehmlich durch die Reduktion der Bewegungsgeschwindigkeit des bewegbaren Elements, bevor das bewegbare Element seine jeweiligen Endpositionen erreicht, möglich.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Skizze einer Ausführungsform einer Antriebseinheit.
- Fig. 2:: ein schematisches Diagramm der Türöffnungskraft in Abhängigkeit des Türöffnungswinkels.

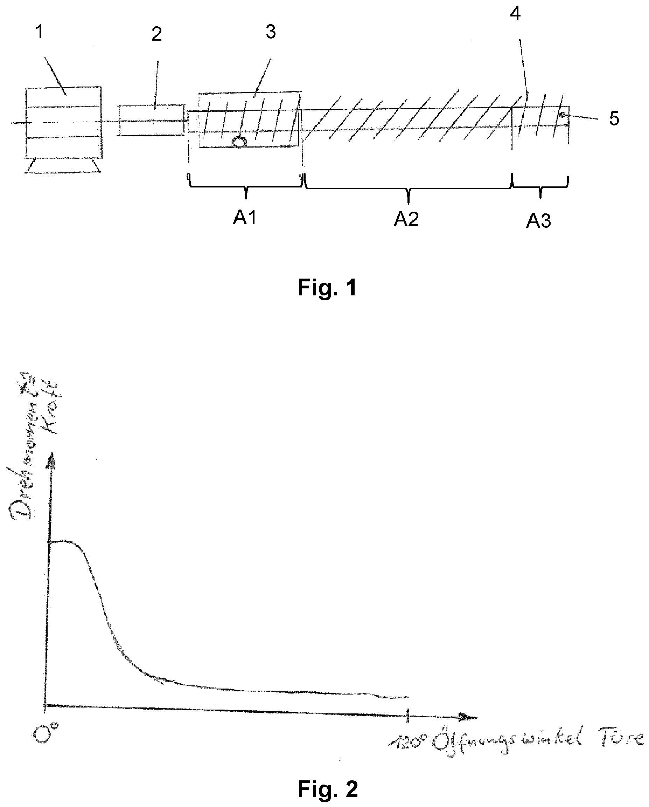

In Fig. 1 ist eine Skizze einer Antriebseinheit für ein bewegbares Element an einem Kühl- und/oder Gefriergerät zu sehen. Ein Elektromotor, vorzugsweise ein bürstenloser Gleichstrommotor (BLDC) treibt über eine Kupplung 2 eine Spindel 5 an, so dass die Spindel 5 sich dreht. Die Spindel 5 setzt ihre Drehung über eine Spindelmutter 3 in eine geradlinige Bewegung um. Die Spindelmutter 3 fährt also bei Drehung der Spindel 5 in eine Richtung, bei umgekehrter Drehung der Spindel 5 fährt die Spindelmutter 3 in die andere Richtung. Die Steigung 4 wird in der Skizze über Striche angedeutet.

Es gibt auf der Spindel drei Abschnitte: A1, A2 und A3. In den Abschnitten A1 und A3 liegt eine geringere Steigung der Spindel als im Abschnitt A2 vor. Dies führt auf Grund der oben schon erläuterten Zusammenhänge zu einer hohen Kraft an der Spindelmutter 3 und zu einer geringen Geschwindigkeit der Spindelmutter 3 in den Abschnitten A1 und A3 und zu einer geringen Kraft und zu einer hohen Geschwindigkeit der Spindelmutter 3 im Abschnitt A2, wenn die Spindel mit einem konstanten Drehmoment und einer konstanten Drehzahl beaufschlagt wird.

Wenn die Spindelmutter 3 beispielsweise mit einer Tür verbunden ist, gelten die Ausführungen zur Bewegung und zu den Kräfteverhältnissen auf die Spindelmutter 3 auch für die Tür.

In Fig. 2 ist auf der Ordinate das Drehmoment bzw. die Kraft, die notwendig ist, um eine Tür eines Kühl- und/oder Gefriergeräts zu bewegen, aufgetragen und auf der Abszisse der Öffnungswinkel der Türe. Bei geschlossener Tür beträgt der Öffnungswinkel 0°. Hier ist auf Grund der oben beschriebenen Effekte durch den Druckunterschied eine sehr hohe Kraft notwendig, um die Tür zu bewegen. Diese Kraft fällt bei weiterer Öffnung der Türe sehr schnell ab und erreicht ab einem gewissen Öffnungswinkel einen stationären Wert. Dadurch wird verdeutlicht, dass zum Öffnen der Tür eine wesentlich höhere Kraft notwendig ist als zum weiteren Bewegen der Tür. Das Diagramm gilt nur für den Öffnungsvorgang. Beim Schließvorgang steigt die Kraft üblicherweise nicht in der Art an. Durch die üblicherweise eingesetzten Magnetdichtungen wird die notwendige Schließkraft sogar normalerweise nahe des Öffnungswinkels 0° verringert.

Ein erfindungsgemäßer Spindelantrieb ist, vorzugsweise optimal, an die Kraftanforderungen beim Bewegen der Tür angepasst.

## Patentansprüche

1. Kühl- und/oder Gefriergerät mit einem bewegbaren Element, wobei das bewegbare Element durch einen Spindelantrieb mit einer Spindel und einer Spindelmutter über die durch die Spindel bewegbare Spindelmutter bewegbar ist, wobei das bewegbare Element mit der Spindelmutter verbunden ist,
**dadurch gekennzeichnet,**
**dass** die Steigung der Spindel in mindestens einem Abschnitt der Spindel eine anderen Wert als in einem anderen Abschnitt der Spindel aufweist.

2. Kühl- und/oder Gefriergerät nach Anspruch 1, **dadurch gekennzeichnet, dass** die Spindel durch einen Elektromotor angetrieben wird.

3. Kühl- und/oder Gefriergerät nach Anspruch 2, **dadurch gekennzeichnet, dass** sich zwischen der Spindel und dem Elektromotor eine Kupplung zur Entkoppelung der Spindel von dem Elektromotor befindet.

4. Kühl- und/oder Gefriergerät nach einem der vorhergehenden Ansprüche, **dadurch gekennzeichnet, dass** das bewegbare Element eine Tür oder eine Schublade ist oder die Klappe oder der Deckel einer Truhe.

5. Kühl- und/oder Gefriergerät nach einem der vorhergehenden Ansprüche, **dadurch gekennzeichnet, dass** die Spindelsteigung in einem Abschnitt von weniger als 40 %, vorzugsweise von weniger als 30 %, vorzugsweise von weniger als 20 %, vorzugsweise von weniger als 10 % des möglichen Verfahrwegs der Spindelmutter geringer ist als in einem anderen Abschnitt.

6. Kühl- und/oder Gefriergerät nach Anspruch 5, **dadurch gekennzeichnet, dass** die Spindelsteigung an einem Ende oder an beiden Enden des Verfahrwegs der Spindelmutter geringer ist als in der Mitte des Verfahrwegs.

7. Kühl- und/oder Gefriergerät nach einem der vorhergehenden Ansprüche, **dadurch gekennzeichnet, dass** die Spindel ein Trapezgewinde oder ein Flachgewinde aufweist.

8. Kühl- und/oder Gefriergerät nach Anspruch 7, **dadurch gekennzeichnet, dass** die Spindel selbsthemmend ist.

9. Kühl- und/oder Gefriergerät nach einem Ansprüche 1 bis 7, **dadurch gekennzeichnet, dass** die Spindelmutter eine Kugelumlaufmutter oder eine Umlaufmutter mit Planetengewinderollen oder mit Rollenrückführung ist.

10. Kühl- und/oder Gefriergerät nach einem der vorhergehenden Ansprüche, **dadurch gekennzeichnet, dass** eine Dämpfung der Bewegung des bewegbaren Elements, bevor das bewegbare Element seine jeweiligen Endpositionen erreicht, ermöglicht wird.
